Europäisches Patentamt

European Patent Office

Office européen des brevets

(19)

(11) **EP 1 511 115 A1**

(12) **EUROPEAN PATENT APPLICATION**

(43) Date of publication:
**02.03.2005 Bulletin 2005/09**

(51) Int Cl.7: **H01M 8/24**, H01M 8/04

(21) Application number: **04009577.0**

(22) Date of filing: **22.04.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **23.04.2003 JP 2003118415**

(71) Applicant: **NISSAN MOTOR CO., LTD.**
**Yokohama-shi Kanagawa-ken (JP)**

(72) Inventors:
• **Tajiri, Kazuya**
**Pennsylvania 16803 (US)**
• **Shimoi, Ryouichi**
**Yokohama-shi Kanagawa-ken (JP)**
• **Ono, Yoshitaka**
**Yokosuka-shi Kanagawa-ken (JP)**

(74) Representative: **Grünecker, Kinkeldey,**
**Stockmair & Schwanhäusser Anwaltssozietät**
**Maximilianstrasse 58**
**80538 München (DE)**

(54) **Polymer electrolyte fuel cell stack and related pressure loss controlling method**

(57)     A polymer electrolyte fuel cell stack is provided with a plurality of unit cells, a gas supply manifold supplying reaction gases to each of the plurality of unit cells, a gas exhaust manifold through which the reaction gases are exhausted, and a pressure loss control mechanism controlling the reaction gases passing trough the gas supply manifold, respective flow passages of the plurality of unit cells and the exhaust manifold to control pressure loss of at least one of the gas supply manifold and the gas exhaust manifold corresponding to the flow rates of the reaction gases in a way to establish a predetermined ratio between the pressure loss of at least one of the gas supply manifold and the gas exhaust manifold and pressure loss in the respective flow passages of the plurality of unit cells.

FIG. 1

**Description**

**BACKGROUND OF THE INVENTION**

The present invention relates to a polymer electrolyte fuel cell stack (PEFC stack), each provided with a plurality of stacks of unit cells employing solid polymer membranes as electrolytes (polymer electrolyte membranes) and a related method, and more particularly, to a polymer electrolyte fuel cell stack with optimized distributing characteristics of reaction gases to be supplied to respective unit cells relating to a supply manifold and an exhaust manifold and its related method.

In a polymer electrolyte fuel cell stack, electrode reactions proceed on both electrodes of a fuel electrode and an oxidizer electrode as shown below.

$$\text{Fuel electrode reaction: } 2H_2 \rightarrow 4H+ + 4e^- \qquad (1)$$

$$\text{Oxidizer electrode reaction: } 4H^+ + 4e^- + O_2 \rightarrow 2H_2O \qquad (2)$$

That is, when hydrogen gas is supplied to the fuel electrode, reaction occurs on the fuel electrode in the formula (1), generating hydrogen ions. Resulting hydrogen ions permeate (disperse) through an electrolyte (a solid polymer electrolyte membrane in case of a polymer electrolyte fuel cell) under a hydrate condition to reach the oxidizer electrode, and in the presence of oxygen containing gas, such as air, supplied to the oxidizer electrode, reaction occurs on a cathode in the formula (2). Upon progress of electrode reactions on the respective electrodes in the formulae (1) and (2), electromotive forces occur on the fuel cell.

In order for such electric power generating reaction to occur, both the fuel electrode and the oxidizer electrode need to have respective chemical species for contribution to reactions and, to this end, reaction gases must be uniformly supplied to reaction surfaces.

Here, in order to utilize electromotive forces resulting from the unit cells as a drive source of a vehicle, it is efficient to raise output voltage with a configuration in which a plurality of unit cells are placed in series. The structure in which the unit cells are laminated to achieve such a purpose is called a stack. With the stack, in usual practice, reaction gases are supplied to the respective unit cells through a supply manifold, and exhaust gases resulting from the respective unit cells are exhausted to the outside through an exhaust manifold, or circulated for reuse.

Even with such a stack, reaction gases must be uniformly supplied onto the reaction surfaces as same as one unit cell, and optimizing a structure between the supply manifold and the exhaust manifold in respect of the unit cells enables realization to ideally supply reaction gases to the respective unit cells. On the contrary, it is conceivable that if no reaction gases are uniformly supplied to the respective unit cells, non-uniformity occurs in electric power generating performances of the respective unit cells and some of the unit cells merely exhibit low electromotive forces or the other one of the unit cells exhibits reversed polarities, that is, a phenomenon with reversed electromotive forces.

Japanese Patent Application Laid-Open Publication No. 8-213044 discloses, in FIG. 8 and its corresponding description on page 5, a fuel cell stack wherein porous material is inserted to a supply manifold to rectify the flows of reaction gases for thereby providing improved flow distributing capability of reaction gases to be supplied to respective unit cells.

Japanese Patent Application Laid-Open Publication No. 2001-202984 discloses, in FIG. 1 and its corresponding description on page 5, a fuel cell stack wherein a rectifier manifold and a supply manifold, which are individually provided, enables flow distributing capability to be improved.

**SUMMARY OF THE INVENTION**

However, upon studies conducted by the present inventors, although such a structure is able to optimize gas distribution to the unit cells at certain flow rates of reaction gases, no gas distribution can be optimized at the other flow rates of reaction gases, resulting in non-uniformity in reaction gas distributing capabilities.

More particularly, with such a structure in which porous material is inserted to the supply manifold or the manifold is diversified, it is hard for an optimal value of gas distributing capability to be established in other range which is out of design conditions. Particularly, since the fuel cell for use in a moving object has a wide operating range in which demand power is generated and the flow rates of reaction gases to be supplied is also apt to vary depending upon demand power, such a phenomenon is conceived to appear notably.

Thus, despite the need for the supply manifold, through which reaction gases are distributed to the respective unit cells, to have uniform distributing capabilities for reaction gases to be supplied to the respective unit cells, in actual practice, it is considered that non-uniformity occurs in rates of reaction gas to be distributed.

Further, merely with such a measure to increase reaction-gas flow resistance of the unit cell separators in order to improve distributing capabilities, the fuel cell stack as a whole encounters increased pressure under which gases are supplied, and a pump or compressor, by which reaction gases are supplied to the stack, bear increased load, leading to deteriorated efficiency of the whole system.

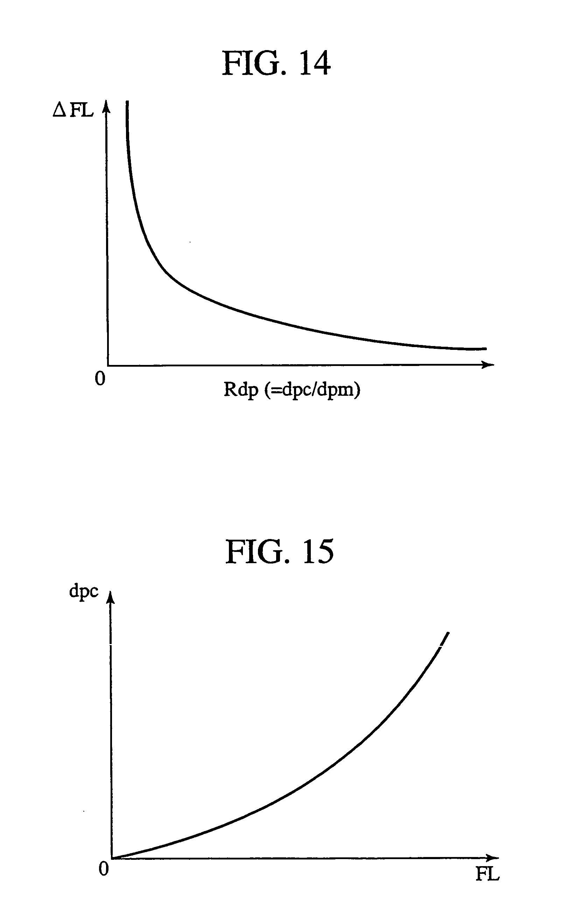

Here, according to the studies conducted by the present inventors, typically in the polymer electrolyte fuel cell stack, upon calculation of the ratio of Rdp = dpc / dpm, that is, the ratio between pressure loss (pressure loss in flow passage of each unit cell) dpc of gases passing through each unit cell and pressure loss dpm of gases passing through the gas supply manifold or passing through the gas exhaust manifold, simulation result has revealed that the relationship between the ratio Rdp between the unit-cell flow-passage pressure loss versus manifold pressure loss and variation (standard deviation) $\Delta$ FL in the flow rates of gases distributed to and supplied to the respective unit cells falls in a curve as represented in FIG. 14.

As shown in FIG. 14, it is apparent that there is a characteristic wherein although when Rdp is small, variation $\Delta$ FL in the flow rates of gases distributed to and supplied to the respective unit cells is remarkably large, variation $\Delta$ FL rapidly drops as Rdp increases and no great variation occurs in variation $\Delta$ FL even in the presence of further increase in Rdp.

Accordingly, first, by permitting the ratio Rdp between the unit-cell flow-passage pressure loss and manifold pressure loss to be kept at a large value to some extent such that variation $\Delta$ FL in the gas flow rates of the respective unit cells is maintained in a region where variation $\Delta$ FL becomes less in the right region in FIG. 14 with no occurrence of great variation, it can be understood that the flow rates of reaction gases to be distributed to and supplied to the respective unit cells can be substantially uniformed.

Further, as shown in FIG. 15, typically with the respective unit cells of the polymer electrolyte fuel cell stack, due to the presence of increase in unit-cell flow-passage pressure loss dpc at increased flow rates FL of gases to be distributed to and supplied to the respective unit cells, it has been found that the ratio Rdp between the unit-cell flow-passage pressure loss and manifold pressure loss is enabled to appropriately lie at an increased value even when setting manifold pressure loss dpm at a large value. On the contrary, if the gas flow rate FL decreases, since unit-cell flow-passage pressure loss dpc correspondingly decreases to cause a drop in the ratio Rdp between the unit-cell flow-passage pressure loss and manifold pressure loss, it has also been found that there is a need for setting manifold pressure loss dpm to a small value and appropriately increasing the value of the ratio Rdp between the unit-cell flow-passage pressure loss and manifold pressure loss.

As a consequence, it can be understood that in order to suppress variation $\Delta$ FL resulting from the flow rates of gases to be distributed to and supplied to the respective unit cells, it is necessary just to control the ratio Rdp between the unit-cell flow-passage pressure loss and manifold pressure loss by use of manifold pressure loss dpm so as to appropriately have a large value by which the ratio Rdp increases toward the right region in FIG. 14, even in the presence of increase or decrease in the gas flow rates FL, while taking into account the characteristic of unit-cell flow-passage pressure loss dpc represented in FIG. 15.

The present invention has been completed upon such studies conducted by the present inventors and has an object to provide a polymer electrolyte fuel cell stack and its related method by which optimum gas distribution property can be obtained corresponding to electric power generating conditions of and the flow rates of reaction gases in a fuel cell stack.

To achieve the above object, in one aspect according to the present invention, a polymer electrolyte fuel cell stack comprises: a plurality of unit cells, each of which is provided with: a membrane electrode assembly having a pair of electrodes between which a solid polymer membrane is sandwiched; and separators between which the membrane electrode assembly is sandwiched; a gas supply manifold supplying reaction gases to each of the plurality of unit cells; a gas exhaust manifold through which the reaction gases are exhausted; and a pressure loss control mechanism controlling the reaction gases passing trough the gas supply manifold, respective flow passages of the plurality of unit cells and the exhaust manifold to control pressure loss of at least one of the gas supply manifold and the gas exhaust manifold corresponding to the flow rates of the reaction gases in a way to establish a predetermined ratio between the pressure loss of at least one of the gas supply manifold and the gas exhaust manifold and pressure loss in the respective flow passages of the plurality of unit cells.

Stated another way, in another aspect according to the present invention, a polymer electrolyte fuel cell stack comprises: a plurality of unit cells, each of which is provided with: a membrane electrode assembly having a pair of electrodes between which a solid polymer membrane is sandwiched; and separators between which the membrane electrode assembly is sandwiched; a gas supply manifold supplying reaction gases to each of the plurality of unit cells; a gas exhaust manifold through which the reaction gases are exhausted; and pressure loss control means for controlling the reaction gases passing trough the gas supply manifold, respective flow passages of the plurality of unit cells and the exhaust manifold to control pressure loss of at least one of the gas supply manifold and the gas exhaust manifold corresponding to the flow rates of the reaction gases in a way to establish a predetermined ratio between the pressure loss of at least one of the gas supply manifold and the gas exhaust manifold and pressure loss in the respective flow passages of the plurality of unit cells.

In the meanwhile, in another aspect, the present invention provides a method of controlling pressure loss in a polymer electrolyte fuel cell stack having a plurality of unit cells, each of which is provided with: a membrane electrode assembly having a pair of electrodes between which a solid polymer membrane is sandwiched; and separators between which the membrane electrode assembly is sandwiched; and a gas supply manifold supplying reaction gases to each of the plurality of unit cells; a gas exhaust manifold through which the reaction gases are exhausted, the method comprising: controlling the reaction gases passing trough the gas supply manifold, respective flow passages of the plurality of unit cells and the exhaust manifold to control pressure loss of at least one of the gas supply manifold and the gas exhaust manifold corresponding to the flow rates of the reaction gases in a way to establish a predetermined ratio between the pressure loss of at least one of the gas supply manifold and the gas exhaust manifold and pressure loss in the respective flow passages of the plurality of unit cells.

Other and further features, advantages, and benefits of the present invention will become more apparent from the following description taken in conjunction with the following drawings.

## BRIEF DESCRIPTION OF THE DRAWINGS

FIG. 1 is a perspective view schematically illustrating a polymer electrolyte fuel cell stack of a first embodiment according to the present invention;

FIG. 2 is an enlarged schematic view of an exhaust manifold section of the polymer electrolyte fuel cell stack of the presently filed embodiment;

FIG. 3 is a schematic view illustrating a mechanism for driving a movable member of the polymer electrolyte fuel cell stack of the presently filed embodiment;

FIG. 4 is an enlarged schematic view of an exhaust manifold section of a polymer electrolyte fuel cell stack of a second embodiment according to the present invention;

FIG. 5 is an enlarged schematic view of a movable member of a polymer electrolyte fuel cell stack of a third embodiment according to the present invention;

FIG. 6 is a perspective view schematically illustrating a polymer electrolyte fuel cell stack of a fourth embodiment according to the present invention;

FIG. 7 is an enlarged schematic view of an exhaust manifold section of the polymer electrolyte fuel cell stack of the presently filed embodiment;

FIG. 8 is a cross sectional view taken on line A-A of FIG. 7;

FIG. 9 is a cross sectional view, corresponding to FIG. 8, of an exhaust manifold section of a polymer electrolyte fuel cell stack of a fifth embodiment according to the present invention;

FIG. 10 is a cross sectional view, corresponding to FIG. 8, of an exhaust manifold section of a polymer electrolyte fuel cell stack of a sixth embodiment according to the present invention;

FIG. 11 is a perspective view typically illustrating a polymer electrolyte fuel cell stack of a seventh embodiment according to the present invention;

FIG. 12 is a flowchart illustrating a basic sequence of pressure loss control to be executed when a clogged condition occurs in a flow passage of a unit cell of the polymer electrolyte fuel cell stack of the presently filed embodiment;

FIG. 13 is a flowchart illustrating a basic sequence of pressure loss control to be executed based on residual hydrogen in the flow passage of the unit cell of the polymer electrolyte fuel cell stack of the presently filed embodiment;

FIG. 14 is a graph of the relationship between the ratio Rdp, between unit-cell flow-passage pressure loss dpc and manifold pressure loss dpm, and variation (standard deviation) $\Delta$ FL of the flow rates of gases distributed to respective unit cells, studied by the present inventors; and

FIG. 15 is a graph of the relationship between the flow rates FL of gases distributed to the unit cells and unit-cell flow-passage pressure loss dpc, studied by the present inventors.

## DETAILED DESCRIPTION OF THE PREFERRED EMBODIMENTS

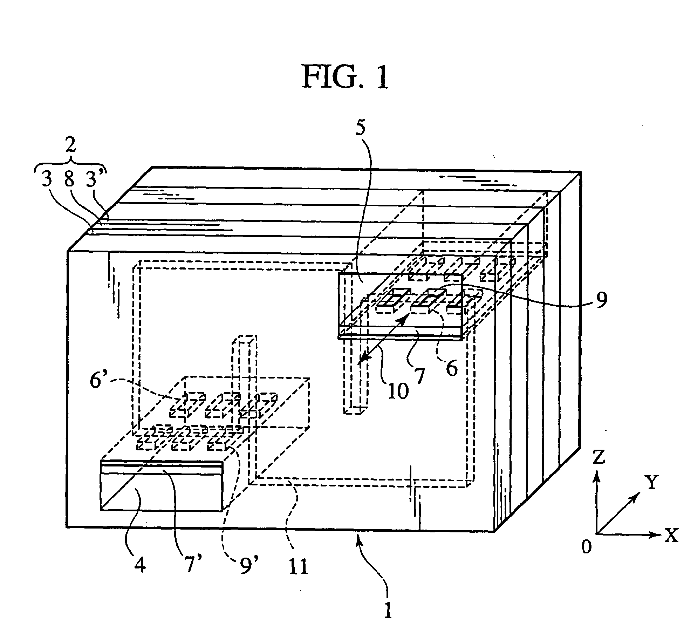

Hereinafter, a polymer electrolyte fuel cell stack and its related method of each of various embodiments according to the present invention are described principally with reference to the accompanying drawings FIGS. 1 to 10. In addition, X, Y, and Z axes form a rectangular coordinate system in the drawing figures. Moreover, the numbers of layers, bores and the like are exemplified representations, and no limitation is intended.

(First Embodiment)

First, a polymer electrolyte fuel cell stack and its related method of a first embodiment according to the present invention are described in detail with reference to FIGS. 1 to 3.

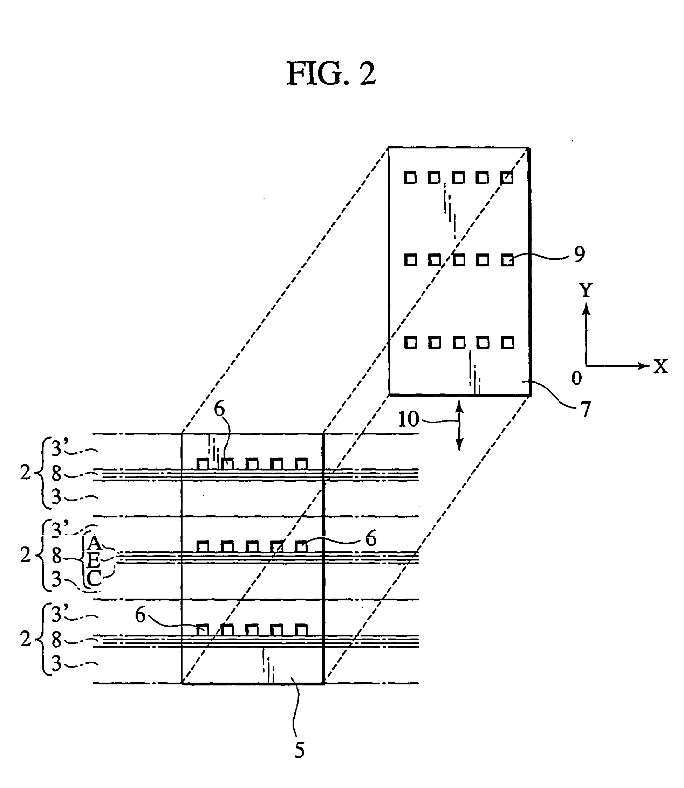

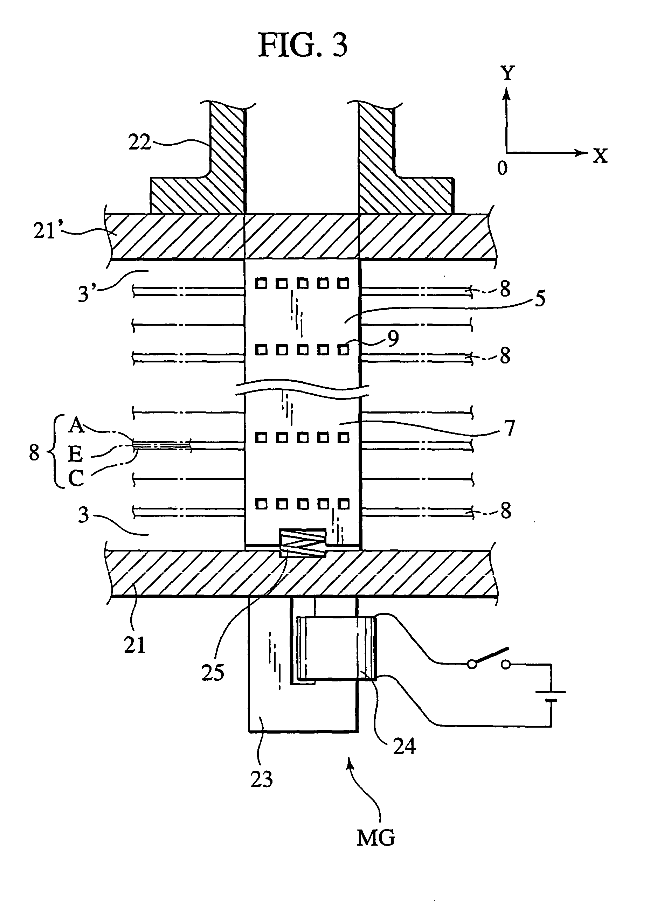

FIG. 1 is a perspective view schematically illustrating a polymer electrolyte fuel cell stack of the presently filed embodiment; FIG. 2 is an enlarged schematic view of an exhaust manifold section of the polymer electrolyte fuel cell stack of the presently filed embodiment; and FIG. 3 is a schematic view illustrating a mechanism for driving a movable member of the polymer electrolyte fuel cell stack of the presently filed embodiment. Incidentally, for the sake of convenience, FIG. 1 shows an intake manifold 4 and an exhaust manifold 5 each in a single piece, and FIG. 2 shows a movable member 7 located in a position obliquely dislocated from an actual position on which the exhaust manifold 5 is placed.

As shown in FIGS. 1 and 2, a fuel cell stack 1 is comprised with a plurality of stacks of unit cells 2.

Each unit cell 2 is comprised with a membrane electrode assembly 8, formed with a solid polymer electrolyte membrane with both surfaces formed with electrodes, and separators 3, 3' that are disposed on both surfaces of the membrane electrode assembly 8 and serve as delivery paths for supplying reaction gases to the unit cell 2 and partition walls between adjacent unit cells.

The membrane electrode assembly 8 is comprised with an electrolyte membrane E, made of the solid polymer electrolyte membrane, and a pair of electrodes (fuel electrode A and oxidizer electrode C) formed on both surfaces of the electrolyte membrane to sandwich the electrolyte membrane. The electrolyte membrane is formed by use of fluoride-based resin in a film with proton conductivity. The pair of electrodes formed on the both surfaces of the electrolyte membrane are made of carbon cloth or carbon paper containing catalysts, composed of platinum or combination of platinum and other metal, so as to be formed in a way to allow the surfaces, on which the catalysts are present, to be brought into contact with the electrolyte membrane.

The pair of separators 3 and 3' are formed by use of dense carbon materials and each has a large number of ribs formed on one surface or both surfaces to ensure passageways for fuel gas, oxidizer gas and coolant medium.

The unit cell 2 includes appropriate numbers of intake manifolds 4 and exhaust manifolds 5, communicating therewith, both of which are formed so as to extend in a stacked direction of the fuel cell stack 1 (along a direction parallel to the Y-axis), and these component parts form the intake manifold and the exhaust manifold of the fuel cell stack 1, respectively.

Oxidizer gas and fuel gas, serving as reaction gases, are fed to the respective unit cells 2 through the associated intake manifolds 4, and then exhausted from the associated exhaust manifolds 5 via passageways (as schematically designated by a numeral 11 shown in FIG. 1) of respective unit cells 2. Disposed to be open to each exhaust manifold 5 are exhaust ports 6 through which reaction gases are exhausted from the unit cells 2.

Located in the respective exhaust manifolds 5 is a movable member 7 that forms a pressure loss control mechanism operative to block the exhaust ports 6 through which exhaust gas is discharged from the unit cells 2, specifically from the separators 3 to the exhaust manifolds 5. The movable member 7 is movable along a movable direction 10 oriented in the stacked direction of the fuel cell stack 1.

The movable member 7 has through-holes 9, which are disposed in opposition to the exhaust ports 6 of the unit cells 2, respectively.

Here, by taking into consideration the setting wherein when the flow rates of reaction gases to be supplied to the fuel cell stack 1 increases typically accompanied with a situation under which the fuel cell stack 1 generates electric power at an increased rate, pressure loss dpc of reaction gases occurring when supplied to the fuel cell stack 1 through the flow passages of the respective unit cells 2 increases by nature and the flow rates FL of supplied reaction gases decrease as specifically described later, the movable member 7 is set to assume a position such that although pressure loss dpm of reaction gases in the exhaust manifold 5 results in slight increase, still, the exhaust ports 6 and the through-holes 9 are displaced from each other by a given extent to compel apertures, through which exhaust gas passes, not to have the maximum area with a view to causing the ratio Rdp between unit-cell flow-passage pressure loss and manifold pressure loss to lie at an adequately large value.

On the contrary, if the flow rates of reaction gases to be supplied to the fuel cell stack 1 decrease typically when the fuel cell stack 1 generates electric power at decreased rate, pressure loss dpc of reaction gases passing through the flow passages of the fuel cell stack 1 to be supplied thereto decreases, and as it is, the ratio Rdp between unit-cell flow-passage pressure loss and manifold pressure loss takes a small value, resulting in variation to occur in the flow rates of reaction gases to be distributed to the respective unit cells 2. Accordingly, in such a case, pressure loss dpm of reaction gases in the exhaust manifolds needs to be set to a lower value than that occurring when the flow rates of reaction gases to be supplied increase and, hence, the movable member 7 is set to assume a position such that the exhaust ports 6 and the associated through-holes 9 are fully opened in complete alignment to allow the apertures through which exhaust gas passes to have the maximum area.

That is, due to movement of the movable member 7 in such a way, the ratio Rdp between unit-cell flow-passage pressure loss and manifold pressure loss increases even when the flow rates of reaction gases to be supplied to the fuel cell stack 7 decreases, enabling the distribution rates of reaction gases being supplied to the respective unit cells 2 to be uniformed.

More particularly, as shown in FIG. 3, adopting a moving mechanism that moves the movable member 7 forming a pressure loss control mechanism enables the area of the aperture through which reaction gases pass to vary in two conditions, i.e., in a large area and a small area. Incidentally, in the drawing figure, connected to the exhaust manifolds 5 is an exhaust pipe 22.

The movable member 7 is made of a magnetic body, such as iron, or a base substrate, formed of non-magnetic body, to which the magnetic body is attached. Here, in order to protect the movable plate 7 from short-circuiting the plural unit cells 2, a surface of the movable plate 7 is coated with insulating corrosion-resistant resin such as fuluorocarbon polymer.

To drive the movable member 7, an electromagnet MG including a yoke 23 and a coil 24 is located in a position opposite to the movable member 7 such that an end plate 21 placed on an end of the fuel cell stack 1 is sandwiched. In addition, disposed between the end plate 21 and the movable member 7 is a return spring 25 by which the movable member 7 is urged toward an end plate 21' opposing to the end plate 21. And, turning on electric current to the coil 24 or turning off the same corresponding to the flow rates of reaction gases enables the movable member 7 to be attracted to the end plate 21 or to be depressed to the end plate 21' such that the movable member 7 can be moved to vary the area of the aperture through which reaction gases pass.

Further, when a need arises for finely moving the movable member 7 for the purpose of finely varying the area of the aperture through which exhaust gas to pass corresponding to the flow rate of exhaust gas, a stepping motor may be adopted as the moving mechanism.

As set forth above, with the structure of the presently filed embodiment that takes into account the characteristic shown in FIG. 15, since adequate unit-cell flow-passage pressure loss is present when the flow rates of reaction gases increase whereas when the flow rates of reaction gases decrease, unit-cell flow-passage pressure loss decreases, the pressure loss control mechanism decreases the manifold pressure loss with a view to utilizing the right region of FIG. 14 where the ratio between unit-cell flow-passage pressure loss and manifold pressure loss further increases such that an optimum gas distributing capability can be obtained corresponding to electric power generating conditions of the fuel cell stack and the flow rates of reaction gases to be supplied thereto.

Furthermore, since the structure of the presently filed embodiment is not only effective to increase unit-cell flow-passage pressure loss but also to perform control for increasing the ratio between unit-cell flow-passage pressure loss and manifold pressure loss to some extent, no increased loads are applied to a pump and compressor that supply reaction gases to the fuel cell stack, enabling the fuel cell system as a whole to be substantially avoided from any losses.

Incidentally, while the presently filed embodiment takes the form of the pressure loss control mechanism that includes the movable member 7 internally disposed in the exhaust manifolds 5, the presently filed embodiment is not limited to such a structure and it may, of course, be possible to take a pressure loss control mechanism, with a movable member 7' that is internally located in the supply manifolds 4, which has supply ports 9' to supply reaction gases to the respective unit cells 2, for thereby controlling pressure loss of reaction gases passing through the supply manifolds 4 to control the ratio between unit-cell flow-passage pressure loss and manifold pressure loss.

(Second Embodiment)

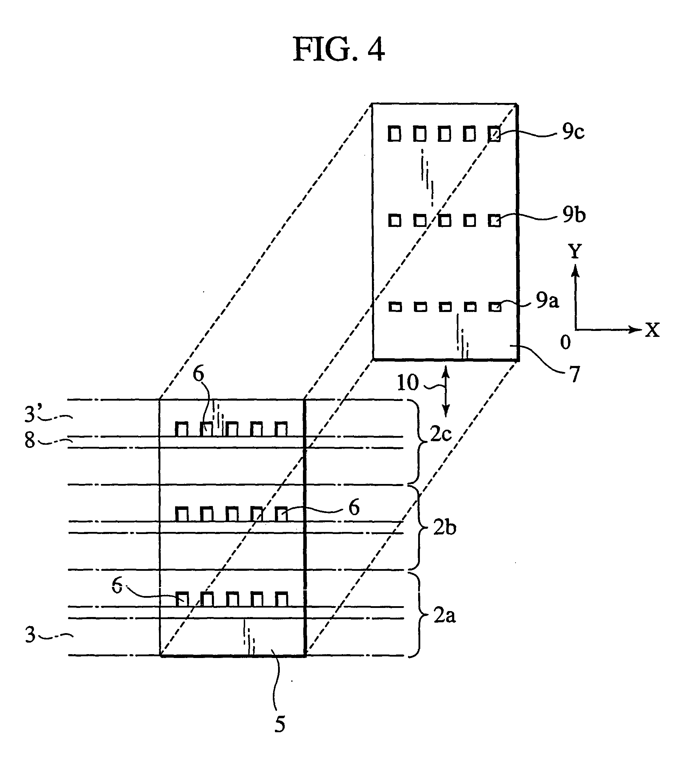

Next, a polymer electrolyte fuel cell stack and its related method of a second embodiment according to the present invention are described below in detail with reference to FIG. 4.

FIG. 4 is an enlarged schematic view of an exhaust manifold section of a polymer electrolyte fuel cell stack of the presently filed embodiment. Incidentally, the positional relationship of FIG. 4 corresponds to that of FIG. 3.

As shown in FIG. 4, the presently filed embodiment differs from the first embodiment in that the movable member 7 is formed with the through-holes with shapes different pending upon the positions of the unit cells. Other component parts are similar to those of the first embodiment and, so, like component parts bear the same reference numerals to omit or simplify redundant description.

In particular, the shapes of the through-holes 9a, 9b, 9c formed in the movable member 7 are different in association with the unit cells 2 such that the exhaust ports 6 and the through-holes 9c are aligned in shape; the through-holes 9b are shorter and smaller in area than those of the through-holes 9c; and the through-holes 9a are further shorter and smaller in area than those of the through-holes 9b.

With such a structure, since the through-holes 9a, 9b, 9c have the shapes different depending upon the positions of the unit cells, that is, the unit cells 2a, 2b, 2c, the setting may be made in a way to avoid the exhaust ports 6 from full alignment with the through-holes, that is, the through-holes 9a, 9b of the movable member 7, and it becomes possible to make setting such that moving the movable member 7 allows an area reduction ratio of the aperture, through which exhaust gas passes, to vary for each flow passage depending upon locations in which the flow passages are present.

In particular, in a case where a particular unit cell or a particular group of unit cells encounter poor flow rates of supplied reaction gases, that is, in a case where the unit cell 2c encounters the poorest flow rates of reaction gases and in the next place, the unit cell 2b encounters poorer flow rates of supplied reaction gases, the setting is so made as to allow the surfaces areas of the through-holes 9a. 9b, 9c to be made smaller in this order than those of the associated exhaust ports 6.

Accordingly, decreasing the area reduction ratio of the relevant unit cell to be smaller than that of the other unit cell, in consideration of the characteristic shown in FIG. 15, reduces associated manifold pressure loss, and a value of the ratio between unit-cell flow-passage pressure loss and manifold pressure loss can be controlled in a further minute manner within the right region as shown in FIG. 14, making it possible to allow reaction gases to be supplied to the unit cells in a more effectively uniformed manner.

(Third Embodiment)

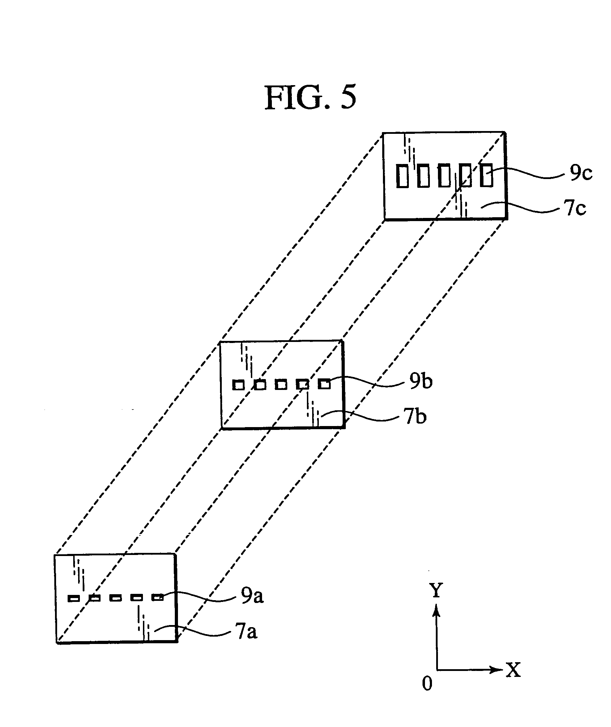

Next, a polymer electrolyte fuel cell stack and its related method of a third embodiment according to the present invention are described below in detail with reference to FIG 5.

FIG. 5 is an enlarged schematic view of a movable member of a polymer electrolyte fuel cell stack of the presently filed embodiment. Incidentally in the drawing figure, for the sake of convenience, the respective movable members are shown in an obliquely displaced status to one another.

As shown in FIG. 5, the presently filed embodiment differs from the second embodiment in that the movable members formed in the exhaust manifolds 5 include a plurality of component parts 7a, 7b, 7c which are independently controlled with individual moving mechanisms, respectively. Other component parts are similar to those of the second embodiment and, so, like component parts bear the same reference numerals to omit or simplify redundant description.

In particular, the movable member 7a has the through-holes 9a with the shape described in connection with the second embodiment; the movable member 7b has the through-holes 9b with the shape described in connection with the second embodiment; and the movable member 7c has the through-holes 9c with the shape described in connection with the second embodiment. The movable members 7a, 7b, 7c are coupled to moving mechanisms with a structure as shown in FIG. 3, respectively, and moved by the associated moving mechanisms so as to appropriately overlap the associated exhaust ports 6 corresponding to operating conditions in which electric power is generated by the fuel cell stack and the flow rates of reaction gases to be supplied thereto.

Accordingly, the fuel cell stack can be operated, in consideration of the characteristic shown in FIG. 15, to control the area reduction ratios at respective optimum values independently from one another for the number of pieces of the movable members corresponding to the operating condition in which electric power is generated by the fuel cell stack and the flow rates of supplied reaction gases, making it possible to control the value of the ratio between unit-cell flow-passage pressure loss and manifold pressure loss in a further minute manner within the right region as shown in FIG. 14 while enabling distributions of reaction gases to be controlled in a further minute fashion.

(Fourth Embodiment)

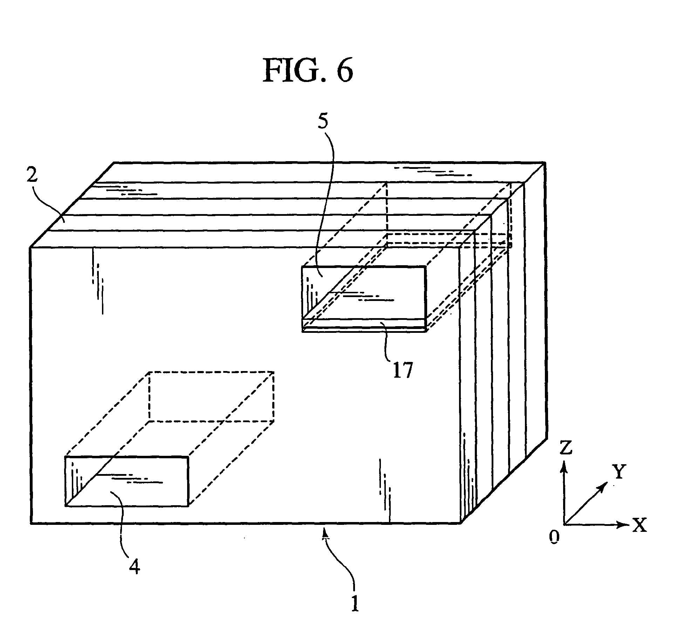

Next, a polymer electrolyte fuel cell stack and its related method of a fourth embodiment according to the present invention are described below in detail with reference to FIGS. 6 to 8.

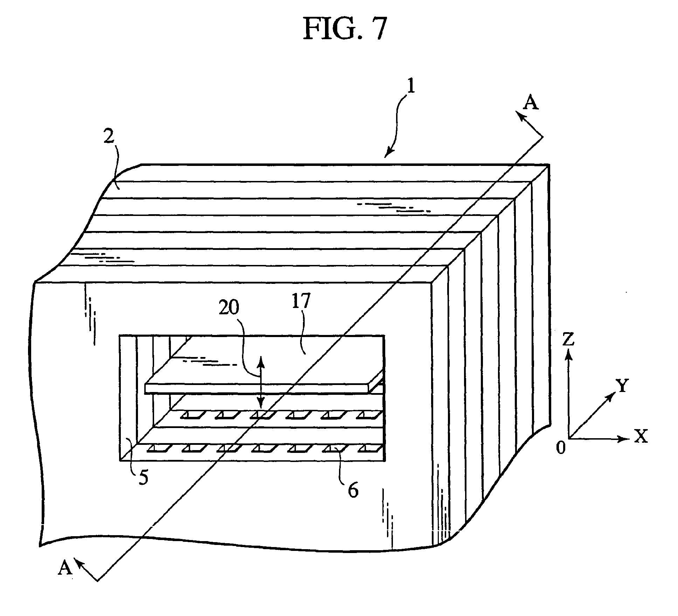

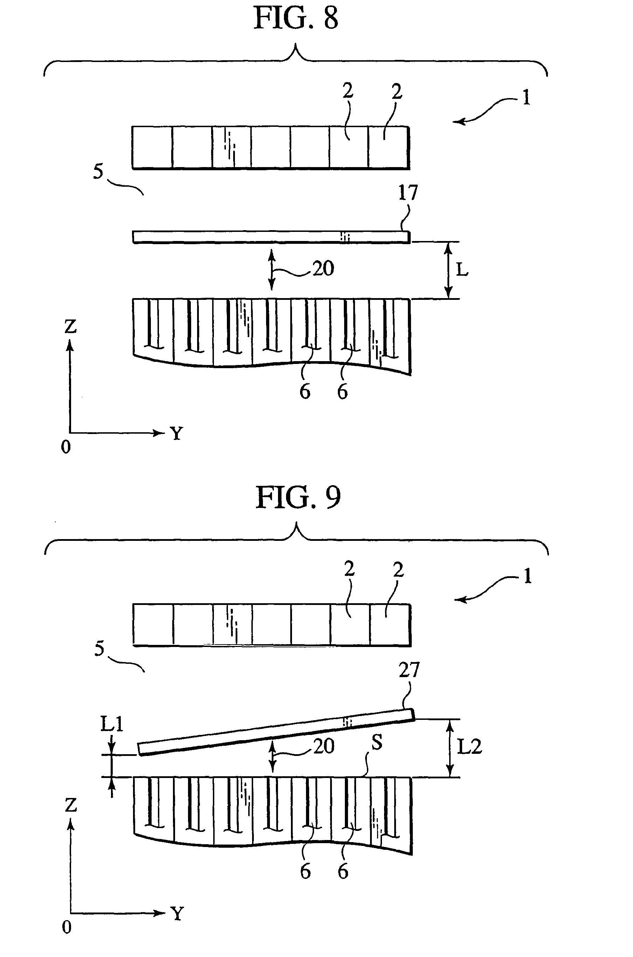

FIG. 6 is a perspective view schematically illustrating a polymer electrolyte fuel cell stack of the presently filed embodiment; FIG. 7 is an enlarged schematic view of an exhaust manifold section of the polymer electrolyte fuel cell stack of the presently filed embodiment; and FIG. 8 is a cross sectional view taken on line A-A of FIG. 7.

As shown in FIGS. 6 to 8, the presently filed embodiment differs from the first embodiment in that the movable member has a structure which is disposed in the exhaust manifolds 5 and formed with a single sheet of plate with no through-hole and which is arranged to be moved closer to or away from the exhaust ports 6. Other component parts are similar to those of the first embodiment and, so, like component parts bear the same reference numerals to omit or simplify redundant description.

In particular, the movable member 17 is disposed in the exhaust manifolds 5 so as to block exhaust gas from directly flowing out from the respective exhaust ports 6 to the outside of the exhaust manifolds 5, and arranged to be operative to move closer to or away from the respective exhaust ports 6 along a movable direction 20 to allow a distance L between the movable member 17 and the respective exhaust ports 6 to be variable.

This allows pressure loss occurring when reaction gases pass through the respective unit cells 2 to increase when the movable member 17 is moved closer to the exhaust port 6 and, in contrast, to decrease when the movable member 17 is moved away from the exhaust port 6.

Accordingly, moving the movable member 17 with respect to the exhaust ports 6, in consideration of the characteristic shown in FIG. 15, such that when a particular unit cell with low flow rates of supplied reaction gases is present, a distance between the movable member and the exhaust ports in the vicinity of the relevant unit cell is made longer than that between the movable member and the exhaust ports of the other unit cell enables the value of the ratio between unit-cell flow-passage pressure loss and manifold pressure loss to increase within the right region as shown in FIG. 14, enabling reaction gases to be uniformly distributed to the respective unit cells 2.

Incidentally, when using an electromagnet as a drive mechanism of the movable member 17 forming part of the presently filed embodiment, the movable member 17 may include a magnetic body or a base substrate on which the magnetic body is adhered, and the electromagnet may be located on an upper end face, along Z-axis, of the fuel cell stack 1 shown in FIG 6.

(Fifth Embodiment)

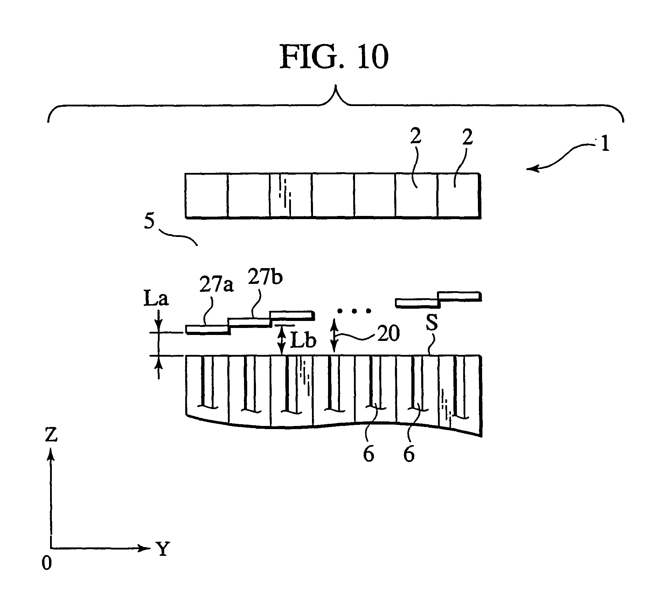

Next, a polymer electrolyte fuel cell stack and its related method of a fifth embodiment according to the present invention are described below in detail with reference to FIG 9.

FIG. 9 is a cross sectional view, corresponding to FIG. 8, of an exhaust manifold section of a polymer electrolyte fuel cell stack of the presently filed embodiment.

As shown in FIG. 9, the presently filed embodiment is similar to the fourth embodiment in that the movable member disposed in the exhaust manifolds 5 is operative to move closer to or away from the exhaust ports 6 but differs from the fourth embodiment in that the movable member is not necessarily parallel to a plane S on which the exhaust ports 6 are present. Other component parts are similar to those of the fourth embodiment and, so, like component parts bear the same reference numerals to omit or simplify redundant description.

In particular, the movable member 27 is set to be operative to variably move closer to or away from the respective exhaust ports 6 along the movable direction 20 such that a distance between the movable member 27 and the respective exhaust ports 6 increases from the left to the right in FIG. 9 (L1<L2).

With such a structure, since the movable member 27 is movable to allow the distance between the movable member 27 and the exhaust ports 6 of the respective unit cells 2 to be different depending upon the respective unit cells 2, moving the movable member 27 enables the setting to be made such that the area reduction ratios of the apertures through which reaction gases pass differ for each flow passage depending on the position of the flow passage.

Accordingly, moving the movable member with respect to the exhaust ports, in consideration of the characteristic shown in FIG. 15, such that when a particular unit cell with low flow rates of supplied reaction gases is present, a distance between the movable member and the exhaust ports in the vicinity of the relevant unit cell is made longer than that between the movable member and the exhaust ports of the other unit cell enables the value of the ratio between unit-cell flow-passage pressure loss and manifold pressure loss to increase within the right region as shown in FIG. 14, enabling reaction gases to be uniformly distributed to the respective unit cells 2.

(Sixth Embodiment)

Next, a polymer electrolyte fuel cell stack and its related method of a sixth embodiment according to the present invention are described below in detail with reference to FIG. 10.

FIG. 10 is a cross sectional view, corresponding to FIG. 8, of an exhaust manifold section of a polymer electrolyte fuel cell stack of the presently filed embodiment.

As shown in FIG. 10, the presently filed embodiment differs from the fifth embodiment in that the movable member disposed in the exhaust manifolds 5 is comprised with a plurality of component parts 27a, 27b, ···. Other component parts are similar to those of the fifth embodiment and, so, like component parts bear the same reference numerals to omit or simplify redundant description.

In particular, the movable member 27a, 27b,··· are set to move closer to or away from the respective exhaust ports 6 along the movable direction 20 in the exhaust manifolds 6 such that a distance between the respective movable members and respective exhaust ports 6 variably increases from the left to the right in FIG. 10 (La<Lb)···).

With such a structure, due to the presence of a configuration wherein the movable members 27a, 27b,··· are movable to allow distances between the movable members 27a, 27b,··· and the exhaust ports 6 of the associated respective unit cells 2 to be different depending upon the respective unit cells 2, moving the movable members 27 enables the setting to be made such that the area reduction ratios of the apertures through which reaction gases pass differ for each flow passage depending on the position of the flow passage.

Accordingly, moving the movable member with respect to the exhaust ports, in consideration of the characteristic shown in FIG. 15, such that when a particular unit cell with low flow rates of supplied reaction gases is present, a distance between the movable member and the exhaust ports in the vicinity of the relevant unit cell is made longer than that between the movable member and the exhaust ports of the other unit cell enables the value of the ratio between unit-cell flow-passage pressure loss and manifold pressure loss to increase within the right region as shown in FIG. 14, enabling reaction gases to be uniformly distributed to the respective unit cells 2.

(Seventh Embodiment)

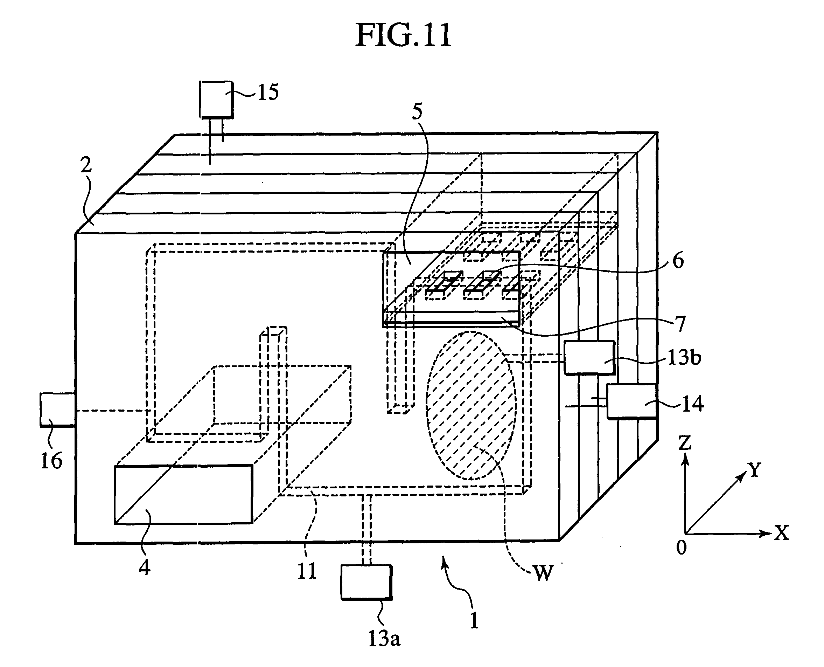

Next, a polymer electrolyte fuel cell stack and its related method of a seventh embodiment according to the present invention are described in detail with reference to FIGS. 11 to 13

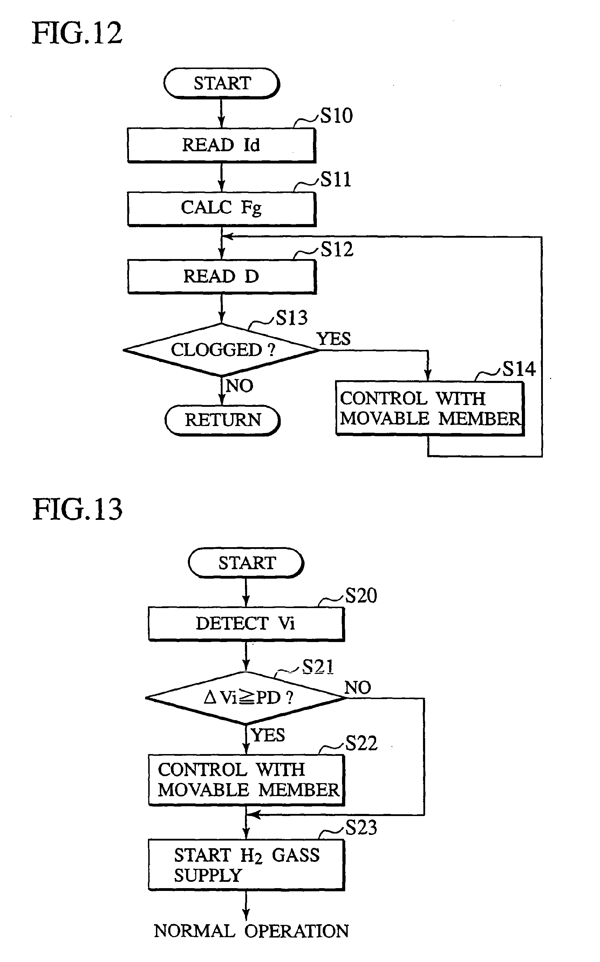

FIG. 11 is a perspective representation typically showing the polymer electrolyte fuel cell stack of the presently filed embodiment; FIG. 12 is a flowchart illustrating a basic sequence of pressure loss control to be executed when a clogged condition occurs in a flow passage of a unit cell of the polymer electrolyte fuel cell stack shown in FIG. 11; and FIG. 13 is a flowchart illustrating a basic sequence of pressure loss control to be executed in the presence of residual hydrogen in the flow passage of the unit cell of the polymer electrolyte fuel cell stack shown in FIG. 11. Incidentally, since the presently filed embodiment has the same fundamental structure as that of the first embodiment, the same component parts bear like reference numerals to omit or simplify redundant description. Of course, the structure of the presently filed embodiment may also be applied to those of the second to sixth embodiments.

With the presently filed embodiment, the polymer electrolyte fuel cell stack has a structure including a clogged condition detector that detects the presence of a clogged condition resulting from condensed water in a gas flow passage inside a unit cell.

First, description is made of a structure that utilizes a phenomenon wherein when a difference in static pressure between a position close proximate to an intermediate point, between an inlet and an outlet of an oxidant gas flow passage of the unit cell, and a position close proximate to an outlet is measured and when the clogged condition resulting from condensed water occurs in the flow passage inside the unit cell, the static pressure difference becomes higher than that resulting during normal operating condition.

In FIG. 11, oxidant gas (such as air), representative of reaction gas, is supplied through the supply manifold 4 to the respective unit cells 2 and exhaust gases are exhausted, through the gas flow passages 11 inside the unit cells, from the exhaust manifold 5 to the outside.

Further, as a clogged condition detector for detecting the clogged condition resulting from condensed water W in the gas flow passage 11 inside the unit cell 2, static pressure detectors 13a, 13b for detecting static pressure in the gas flow passage 11 of each unit cell 2 are disposed. The static pressure detectors 13a, 13b may be possible to use semiconductor pressure sensors each of which incorporates a silicone diaphragm formed with a bridge circuit using a piezoelectric element. The static pressure detector 13a is disposed in close proximity to an intermediate point of the gas flow passage 11, and the static pressure detector 13b is disposed in close proximity to an outlet of the gas flow passage 11.

A probability occurs in which as reaction gases are progressively consumed at the downstream side at a higher rate than that of the upstream side in the gas flow passage 11 of the unit cell 2, product water resulting from reaction accumulates to cause condensed water W to form a clogged condition in the gas flow passage 11 at the downstream side thereof. In such case, due to the presence of the static pressure detectors 3a, 13b disposed in close proximity to the intermediate point in a path between the inlet and the outlet of the gas flow passage 11 of the unit cell 2 and in close proximate to the outlet, respectively, static pressure detected values are obtained to compare these values to enable discrimination to be made that when resulting data exceeds a predetermined value, the clogged condition resulting from condensed water occurs in the gas flow passage 11.

And, the detection signals delivered from the static pressure detectors 13a, 13b are applied to a controller that is not shown. Then, if the clogged condition resulting condensed water W occurs in the gas flow passage 11, gas static pressure increases at an upstream of condensed water W and a difference between the detected value of the static pressure detector 13a and the detected value of the static pressure detector 13b increases, resulting in a capability of discriminating the clogged condition.

Here, attempt is made to conduct preliminarily experimental tests to create a status by which discrimination can be made whether the clogged condition resulting from condensed water W occurs in the gas flow passage to allow resulting detected values of the static pressure detectors 13a and 13b to be as parameters to derive a discriminating value, enabling discrimination to be made that the clogged condition occurs in the gas flow passage, of the static pressure difference, and such discriminating value is stored as map in the controller. Map for enabling discrimination of such a static pressure difference may include data obtained by plotting the detected value of the static pressure detector 13a on the ordinate and plotting a difference between the detected value of the static pressure detector 13a and the detected value of the static pressure detector 13b on the abscissa.

Incidentally, the static pressure difference based on which discrimination is made that the gas flow passage encounters the clogged condition can be determined without utilizing map that is preliminarily stored. To this end, the static pressure detector 13a is disposed in close proximate to the intermediate point of the gas flow passage 11 and the static pressure detector 13b is disposed in close proximate to the outlet of the gas flow passage 11 in each unit cell 2 that forms the fuel cell stack 1, and the static pressure difference is detected for each unit cell 2, thereby obtaining a representative value (including an average value, a middle value, or an intermediate value between the maximum value and the minimum value of the entire unit cells) of the static pressure difference of the fuel cell stack 1 as a whole.

And, discrimination may be made that the unit cell 2, which exhibits the static pressure difference indicative of a certain value or a value exceeding a certain ratio, includes the gas flow passage encountered with the clogged condition.

And, the controller operates to read the detected values of the static pressure detectors 13a, 13b for each given control cycle, such as for each 10 [mS], during operation of the fuel cell and discriminates whether the clogged condition resulting from condensed water occurs in the gas flow passage whereupon if the clogged condition occurs in the gas flow passage11, the movable member 7 is moved in a way to cause fluctuations in pressure loss to eliminate the clogged condition.

Next, description is made of a sequence of pressure loss control, to be executed in the structure using such static pressure detectors 13a and 13b, with reference to FIG. 12. Incidentally, such control is executed with the controller that is not shown and flowchart shown in FIG. 12 is retrieved from main routine of the controller for each 10[mS] and executed.

As shown in FIG. 12, first in step S10, the controller operates to read in a demanded electric current value Id required for the fuel cell stack 1. In an application to a fuel cell powered vehicle, such a demanded electric current value is able to include a value proportionate to a product resulting from an accelerator displacement value and a vehicle speed.

Next in step S11, the reaction gas flow rate Fg, that is, the hydrogen gas flow rate and the air flow rate are calculated, thereby operating a hydrogen flow regulator valve, an air supply compressor and an air pressure regulator valve.

In succeeding step S12, the clogged condition detector operates to read information D related to the clogged condition resulting from condensed water W in the gas flow passage 11 of each unit cell 2. Here, the clogged condition detector includes the static pressure detector 13a disposed in close proximity to the intermediate point of the gas flow passage 11 and the static pressure detector 13b disposed in close proximity to the outlet, and concretely, information D related to the clogged condition is read concretely by receiving these detection signals.

In subsequent step S13, discrimination is made whether there exists the unit cell 2 whose gas flow passage 11 encounters with the clogged condition resulting from condensed water W. If discrimination is made that the unit cell 2 in which clogged condition occurs is present, operation is routed to step S14 whereas if discrimination is made that no unit cell 2 being clogged is present, operation is routed back to main routine.

In step S14, the movable member 7 is moved to variably control pressure loss in the gas flow passage 11 to cause fluctuations to occur in pressure loss for thereby pushing condensed water W toward the outlet of the gas flow passage 11 to be expelled through the exhaust port 6 to the exhaust manifold 6. And, operation is routed back to step S12 whereupon operations in step S12 and step S14 are repeatedly executed until condensed water W is completely discharged from the exhaust port 6 to the exhaust manifold 5, and when condensed water W is completely discharged, discrimination in step S13 is negative and operation is routed back to main routine.

Next, description is made of a structure that uses a cell resistance detector 14, as a clogged condition detector, for measuring alternating electric current resistance of the unit cell 2.

The cell resistance detector 14 detects alternating electric current resistance between the anode and the cathode of the unit cell 2. That is, the cell resistance detector 14 measures alternating electric current by applying alternating voltage across the anode and the cathode of each unit cell 2 and calculates alternating impedance in terms of alternating voltage and alternating electric current. Here, the larger the amount of condensed water W present in the gas flow passage 11 is, the lower will be the alternating impedance of the unit cell 2. Thus, measuring alternating impedance enables the clogged condition resulting from condensed water W to be detected.

Although pressure loss control, to be executed when the clogged condition occurs in the flow passage inside the unit cell with such a structure, is executed fundamentally in the same manner as that of flowchart shown in FIG. 12, the discriminating value, enabling discrimination, is derived in such a way that a condition is preliminarily and experimentally created for enabling the clogged condition resulting from condensed water W to be discriminated and the discriminating value associated with alternating impedance, based on which discrimination is made that the clogged condition occurs, is derived from the detected value of the cell resistance detector 14 whereupon the discriminating value associated with alternating impedance is stored as map in the controller. Of course, alternating impedance, based on which the presence of the clogged condition is discriminated, can be determined without using map that is preliminarily stored. To this end, the cell resistance detectors 14 are provided in the respective unit cells 2 that form the fuel cell stack 1, and alternating impedance is detected for each unit cell whereupon operation is executed to obtain a representative value (such as an average value, a middle value and an intermediate value) of alternating impedances of the entire fuel cell stacks 1. And, discrimination may be made that the clogged condition occurs in the gas flow passage 11 of the unit cell 2 when this unit cell 2 exhibits a certain value or a value that decreases by a rate exceeding a certain ratio in terms of such a representative value.

Next, description is made of a structure that includes a cell voltage detector 15, as the clogged condition detector, for measuring a cell voltage of the unit cell 2.

The cell voltage detector 15 serves to detect a voltage across the anode and the cathode of the unit cell 2, and larger the amount of condensed water W in the gas flow passage 11 is, the lower will be the voltage of the unit cell 2. Accordingly, measuring the cell voltage of the unit cell 2 enables the clogged condition resulting from condensed water W to be detected.

Although pressure loss control, to be executed when the clogged condition occurs in the flow passage inside the unit cell with such a structure, is executed fundamentally in the same manner as that of flowchart shown in FIG. 12, the discriminating value, enabling discrimination, is derived in such a way that a condition is preliminarily and experimentally created for enabling the clogged condition resulting from condensed water W to be discriminated and a voltage discriminating value, based on which discrimination is made that the clogged condition occurs, is derived from the detected value of the cell voltage detector 15 whereupon the voltage discriminating value is stored as map in the controller. Of course, the cell voltage, based on which the presence of the clogged condition for the gas flow passage of each unit cell 2 is discriminated, can be determined without using map that is preliminarily stored. To this end, the cell voltage detectors 15 are provided in the respective unit cells 2 that form the fuel cell stack 1, and the cell voltage is detected for each unit cell whereupon operation is executed to obtain a representative value (such as an average value, a middle value and an intermediate value) of the cell voltages of the fuel cell stack 1 as a whole. And, discrimination may be made that the clogged condition occurs in the gas flow passage 11 of the unit cell 2 when this unit cell 2 exhibits a certain value or a value that decreases by a rate exceeding a certain ratio in terms of such a representative value.

Next, description is made of a structure that includes a temperature detector 16, as the clogged condition detector, for measuring a temperature of the unit cell 2.

The temperature detector 16 serves to detect the temperature of a position close proximity to the inlet of the gas flow passage 11 of the unit cell 2, that is, a position in the vicinity of the supply manifold 4 of the gas flow passage 11.

The clogged condition resulting from condensed water W occurs in the gas flow passage 11 of the unit cell 2 at an outlet thereof at an increased frequency and, hence, the unit cell 2 generates electric power in a concentrated area near the inlet of the gas flow passage 11. From this phenomenon, with the unit cell 2 in which the clogged condition occurs, the temperature in close proximity to the inlet of the gas flow passage 11 becomes higher than that experienced during a normal condition, and using the temperature detector 16 to detect this temperature enables the clogged condition to be discriminated.

Although pressure loss control, to be executed when the clogged condition occurs in the flow passage inside the unit cell with such a structure, is executed fundamentally in the same manner as that of flowchart shown in FIG. 12, the discriminating value, enabling discrimination, is derived in such a way that a condition is preliminarily and experimentally created for enabling the clogged condition resulting from condensed water W to be discriminated to allow a voltage discriminating value, based on which discrimination is made that the clogged condition occurs, to be derived from the detected value of the temperature detector 16 whereupon the voltage discriminating value is stored as map in the controller. Of course, the cell voltage, based on which discrimination is made for each unit cell 2 that the clogged condition occurs in the gas flow passage 11, can also be determined without using map that is preliminarily stored. To this end, the temperature detectors 16 are provided in the respective unit cells 2 that form the fuel cell stack 1, and the temperatures are detected for each unit cell whereupon operation is executed to obtain a representative value (such as an average value, a middle value and an intermediate value) of the temperatures of the fuel cell stack 1 as a whole. And, discrimination may be made that the clogged condition occurs in the gas flow passage 11 of the unit cell 2 when this unit cell 2 exhibits a certain value or a value that decreases by a rate exceeding a certain ratio in terms of such a representative value.

By the way, using the above-described cell voltage detector 15 makes it possible to detect the residual hydrogen quantity (concentration) of the fuel gas flow passage of each unit cell 2 inside of the fuel cell stack 1 during start-up of the fuel cell system involving the fuel cell stack 1, for thereby controlling the movable member such that the smaller the residual hydrogen quantity of the unit cell is, the larger will be the amount of hydrogen to be supplied to that unit cell. Incidentally, each gas flow passage to be objective is the fuel gas (hydrogen) flow passage that is representatively shown as the flow passage 11 in FIG. 11 for the sake of explanation.

The cell voltage detector 15 detects the voltage of each unit cell 2 during start-up of the fuel cell system and derives residual hydrogen quantity ratio distribution of each unit cell 2 within the stack 1 from a distribution pattern in the cell voltages of the fuel cell stack 1. The larger the residual hydrogen quantity in the fuel gas flow passage 11 of the unit cell 2 is, the higher will be the cell voltage to be detected by the cell voltage detector 15.

Here, due to the coexistence of hydrogen and air inside the fuel gas flow passage 11 during start-up of the fuel cell stack 1 when starting up the fuel cell system, remarkable deterioration tends to occur in a catalytic layer of the cathode and, hence, it is necessary to shorten the time interval, in which hydrogen and air are coexistent, as less as possible. Therefore, by using the cell voltage detector 15 to detect the cell voltage distribution pattern from which residual hydrogen quantity distribution is derived to allow an inversed ratio of residual hydrogen quantity distribution to be extract for thereby commencing to supply hydrogen gas, hydrogen can be quickly replaced with air in the unit cell in which large quantity of air is present, thereby suppressing deterioration of the fuel cell to the minimal.

Pressure loss control, to be executed based on residual hydrogen in the flow passage 11 inside the fuel cell 2, is explained below with reference to FIG. 13. The controller executes such control during start-up of the fuel cell system.

First, as shown in FIG. 13, in step S20, non-load voltage Vi of each unit cell 2 is detected by the cell voltage detector 15 and read into the controller.

In next step S21, the controller calculates a fluctuation ΔVi from non-load voltage detected values Vi of the respective unit cells 2 and makes discrimination whether the fluctuation Δ Vi is equal to or exceeds a predetermined value PD. To this end, a mean value V μ and a variance V σ of the non-load voltage detected values Vi of the respective unit cells 2 of the fuel cell stack 1 as a whole are calculated and if the variance V σ of the non-load voltage detected values Vi is equal to or exceeds a predetermined value, then, discrimination is made that the fluctuation Δ Vi is equal to or exceeds the predetermined value PD. Of course, it may be possible to derive the mean value V μ, the maximum value Vmax and the minimum value Vmin to allow discrimination to be made that if a value of the mean value Vmax-Vμ or a value of the mean value V μ -Vmin is equal to or exceeds a predetermined ratio in terms of V μ , the fluctuation Δ Vi is equal to or exceeds the predetermined value PD. Incidentally, this discriminating value results from values that are effective for adequately suppressing deterioration in the fuel cell stack 1 and obtained through preliminary simulation and experimental tests.

Here, in step S21, if discrimination is made that the fluctuation Δ Vi is equal to or exceeds the predetermined value PD, operation is routed to step S22 where the movable member 7 is controlled such that pressure loss in the fuel gas flow passage 11 of the fuel cell 2, with a low level in the non-load voltage detected values Vi, decreases in accordance with the non-load voltage detected values Vi, that is, such that the smaller the residual hydrogen quantity in a unit cell among the plurality of unit cells is, the larger a quantity of hydrogen is supplied to this unit cell.

In subsequent step S23, supply of hydrogen, serving as fuel, is commenced and, then, the fuel cell stack 1 shifts to a normal operation control mode.

On the contrary, in step S23, if discrimination is made that the fluctuation Δ Vi is less than the predetermined value PD, operation is routed to step S23 without executing step S22.

With such a structure, in addition, when the fuel cell system is started up, by detecting decrease of hydrogen partial pressure in the fuel gas flow passage 11 of each unit cell 2, that is, the mixing ratio of air to be supplied into the fuel gas flow passage 11 of each unit cell 2 and controlling so as to increase the flow rate of hydrogen such that a further increased of hydrogen is supplied to the fuel cell 2 exibiting low hydrogen partial pressure (hydrogen quantity), air admitted to the unit cell 2 can be rapidly expelled in each unit cell 2 of the fuel cell stack 1 during start-up of the fuel cell system. Typically, the proportion of the flow rate is preferably controlled to form the inversed ratio of residual hydrogen partial pressure. This enables occurrence time, in which a localized cell is formed due to coexistence of hydrogen gas and air, to be shortened, thereby resulting in less deterioration in the fuel cell during initiation of hydrogen supply while making it possible to start electric power generation within shortened start-up time.

Although the invention has been described above by reference to certain embodiments of the invention, the invention is not limited to the embodiments described above. Modifications and variations of the embodiments described above will occur to those skilled in the art, in light of the teachings. The scope of the invention is defined with reference to the following claims.

**Claims**

**1.** A polymer electrolyte fuel cell stack (1) comprising:

a plurality of unit cells (2), each of which is provided with:

a membrane electrode assembly (8) having a pair of electrodes (A, C) between which a solid polymer membrane (E) is sandwiched; and
separators (3, 3') between which the membrane electrode assembly is sandwiched;

a gas supply manifold (4) supplying reaction gases to each of the plurality of unit cells;
a gas exhaust manifold (5) through which the reaction gases are exhausted; and
a pressure loss control mechanism (7, 7', 17, 27) controlling the reaction gases passing trough the gas supply manifold, respective flow passages of the plurality of unit cells and the exhaust manifold to control pressure loss of at least one of the gas supply manifold and the gas exhaust manifold corresponding to the flow rates of the reaction gases in a way to establish a predetermined ratio between the pressure loss of at least one of the gas supply manifold and the gas exhaust manifold and pressure loss in the respective flow passages of the plurality of unit cells.

**2.** The polymer electrolyte fuel cell stack according to claim 1, wherein the pressure loss of at least one of the gas supply manifold (4) and the gas exhaust manifold (5) is controlled so as to decrease as the flow rates of the reaction gases decreases.

**3.** The polymer electrolyte fuel cell stack according to claim 1 or 2, wherein the pressure loss control mechanism (7, 7', 17, 27) includes a movable member (7, 7', 17, 27) disposed in at least one of the gas supply manifold (4) and the gas exhaust manifold (5).

**4.** The polymer electrolyte fuel cell stack according to claim 3, wherein moving the movable member (7, 7', 17, 27) allows control of at least one of an area of each of supply ports (6') through which the reaction gases are supplied from the gas supply manifold (4) to the plurality of unit cells (2) and an area of each of exhaust ports (6) through which the reaction gases are exhausted from the plurality of unit cells to the gas exhaust manifold (5).

**5.** The polymer electrolyte fuel cell stack according to claim 4, wherein the pressure loss control mechanism (7, 7') has through-holes (9, 9'), associated with at least one of the supply ports (6') and the exhaust ports (6), whereby moving the pressure loss control mechanism allows control of at least one of the area of each of the supply ports and the area of each of the exhaust ports.

**6.** The polymer electrolyte fuel cell stack according to claim 5, wherein a reduction ratio of at least one of the area of each of the supply ports (6') and the area of each of the exhaust ports (6) resulting from movement of the movable member (7, 7') is set depending upon each of the plurality of unit cells (2).

**7.** The polymer electrolyte fuel cell stack according to claim 1, wherein the pressure loss control mechanism (7, 7') includes a plurality of movable members (7a, 7b, 7c) disposed in at least one of the gas supply manifold (4) and the gas exhaust manifold (5), and the plurality of movable members are associated with at least one of supply ports (6') through which the reaction gases are supplied from the gas supply manifold to the plurality of unit cells (2) and exhaust ports (6) through which the reaction gases are exhausted from the plurality of unit cells to the gas exhaust manifold, whereby moving the movable members allows at least one of an area of each of the supply ports, through which the reaction gases are supplied from the gas supply manifold to the plurality of unit cells, and an area of each of the exhaust ports, through which the reaction gases are exhausted from the plurality of unit cells to the gas exhaust manifold, to be independently controlled.

**8.** The polymer electrolyte fuel cell stack according to claim 7, wherein a reduction ratio of at least one of the area of each of the supply ports (6') and the area of each of the exhaust ports (6) resulting from movement of the movable members (7a, 7b, 7c) is independently controlled in accordance with each of the plurality of unit cells (2).

**9.** The polymer electrolyte fuel cell stack according to claim 3, wherein the movable member (17, 27) is disposed in opposition to at least one of supply ports (6'), through which the reaction gases are supplied from the gas supply manifold (4) to the plurality of unit cells (2), and exhaust ports (6), through which the reaction gases are exhausted from the plurality of unit cells to the gas exhaust manifold (5), to variably control a distance between the movable members and at least one of the supply ports and the exhaust ports.

**10.** The polymer electrolyte fuel cell stack according to claim 9, wherein the distance between the movable member (27) and at least one of the supply ports (6') and the exhaust ports (6) is set depending upon each of the plurality of unit cells (2).

**11.** The polymer electrolyte fuel cell stack according to claim 1, wherein the pressure loss control mechanism (27) includes a plurality of movable members (27a, 27b,···) associated with at least one of the gas supply manifold (4) and the gas exhaust manifold (5), and the plurality of movable members are disposed in opposition to at least one of supply ports (6'), through which the reaction gases are supplied from the gas supply manifold to the plurality of unit cells (2), and exhaust ports (6), through which the reaction gases are exhausted from the plurality of unit cells to the gas exhaust manifold, to allow a distance between the plurality of movable members and at least one of the supply ports and the exhaust ports to be independently controlled.

**12.** The polymer electrolyte fuel cell stack according to claim 11, wherein the distance between the plurality of movable members (27a, 27b,···) and at least one of the supply ports (6') and the exhaust ports (6) is independently controlled in accordance with each of the plurality of unit cells (2).

**13.** The polymer electrolyte fuel cell stack according to claim 1, further comprising a clogged condition detector detecting a clogged condition resulting from condensed water in the flow passage of at least one unit cell of the plurality of unit cells (2),

wherein the pressure loss control mechanism (7, 7', 17, 27) control the pressure loss so as to alleviate the clogged condition.

**14.** The polymer electrolyte fuel cell stack according to claim 1, further comprising a residual hydrogen detector detecting a residual hydrogen quantity in the flow passage of each of the plurality of unit cells (2),

wherein the pressure loss control mechanism (7, 7', 17, 27) controls the pressure loss such that the smaller the residual hydrogen quantity in a unit cell among the plurality of unit cells is, the larger a quantity of hydrogen is supplied to the unit cell.

**15.** A method of controlling pressure loss in a polymer electrolyte fuel cell stack (1) having a plurality of unit cells (2), each of which is provided with: a membrane electrode assembly (8) having a pair of electrodes (A, C) between which a solid polymer membrane (E) is sandwiched; and separators (3, 3') between which the membrane electrode assembly is sandwiched; and a gas supply manifold (4) supplying reaction gases to each of the plurality of unit cells; a gas exhaust manifold (5) through which the reaction gases are exhausted, the method comprising:

controlling the reaction gases passing trough the gas supply manifold, respective flow passages of the plurality of unit cells and the exhaust manifold to control pressure loss of at least one of the gas supply manifold and the gas exhaust manifold corresponding to the flow rates of the reaction gases in a way to establish a predetermined ratio between the pressure loss of at least one of the gas supply manifold and the gas exhaust manifold and pressure loss in the respective flow passages of the plurality of unit cells.

# FIG. 1

# FIG. 2

# FIG. 3

# FIG. 4

## FIG. 5

# FIG. 6

# FIG. 7

# FIG. 8

# FIG. 9

# FIG. 10

# FIG.11

EP 1 511 115 A1

FIG.12

```
        ┌─────────────┐
        │    START    │
        └─────────────┘
               │
               ▼                    ~S10
        ┌─────────────┐
        │   READ Id   │
        └─────────────┘
               │
               ▼                    ~S11
        ┌─────────────┐
        │   CALC Fg   │
        └─────────────┘
               │
               ▼                    ~S12
        ┌─────────────┐
        │   READ D    │
        └─────────────┘
               │
               ▼        ~S13
          ╱─────────╲        YES
         ╱ CLOGGED ? ╲──────────────┐
          ╲─────────╱               │
               │ NO                 ▼        ~S14
               ▼              ┌──────────────────┐
        ┌─────────────┐       │  CONTROL WITH    │
        │   RETURN    │       │  MOVABLE MEMBER  │
        └─────────────┘       └──────────────────┘
```

FIG.13

```
        ┌─────────────┐
        │    START    │
        └─────────────┘
               │
               ▼                    ~S20
        ┌─────────────┐
        │  DETECT Vi  │
        └─────────────┘
               │
               ▼        ~S21
          ╱─────────╲        NO
         ╱ ΔVi ≧ PD ? ╲─────────────┐
          ╲─────────╱               │
               │ YES                │
               ▼          ~S22       │
        ┌──────────────────┐        │
        │  CONTROL WITH    │        │
        │  MOVABLE MEMBER  │        │
        └──────────────────┘        │
               │                     │
               ▼◄────────────────────┘
                          ~S23
        ┌──────────────────┐
        │  START H₂ GASS   │
        │     SUPPLY       │
        └──────────────────┘
               │
               ▼
       NORMAL OPERATION
```

# FIG. 14

$\Delta$ FL

0

Rdp (=dpc/dpm)

# FIG. 15

dpc

0

FL

**EP 1 511 115 A1**

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | PATENT ABSTRACTS OF JAPAN vol. 1996, no. 12, 26 December 1996 (1996-12-26) & JP 8 213044 A (TOYOTA MOTOR CORP), 20 August 1996 (1996-08-20) * abstract * | 1-15 | H10M8/24 H01M8/04 |
| Y | PATENT ABSTRACTS OF JAPAN vol. 2000, no. 24, 11 May 2001 (2001-05-11) & JP 2001 202984 A (TOSHIBA CORP), 27 July 2001 (2001-07-27) * abstract * | 1-15 | |
| Y | US 2001/014415 A1 (IIO MASATOSHI  ET AL) 16 August 2001 (2001-08-16) * see [0009], claims * | 1-15 | |
| Y | WO 01/01508 A1 (BALLARD POWER SYSTEMS INC.) 4 January 2001 (2001-01-04) * see p.7, l.. 18-31 , claims * * the whole document * | 1-15 | TECHNICAL FIELDS SEARCHED (Int.Cl.7) H01M |
| Y | PATENT ABSTRACTS OF JAPAN vol. 0133, no. 54 (E-802), 8 August 1989 (1989-08-08) & JP 1 114268 A (HITACHI LTD), 2 May 1989 (1989-05-02) * abstract * | 1-15 | |

The present search report has been drawn up for all claims

| Place of search | Date of completion of the search | Examiner |
|---|---|---|
| Munich | 16 August 2004 | Stellmach, J |

EPO FORM 1503 03.82 (P04C01)

**EP 1 511 115 A1**

### ANNEX TO THE EUROPEAN SEARCH REPORT
### ON EUROPEAN PATENT APPLICATION NO.

EP 04 00 9577

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2004

| Patent document cited in search report | | Publication date | Patent family member(s) | | Publication date |
|---|---|---|---|---|---|
| JP 8213044 | A | 20-08-1996 | NONE | | |
| JP 2001202984 | A | 27-07-2001 | NONE | | |
| US 2001014415 | A1 | 16-08-2001 | JP | 2001307757 A | 02-11-2001 |
| | | | DE | 10107127 A1 | 13-09-2001 |
| WO 0101508 | A1 | 04-01-2001 | US | 6472090 B1 | 29-10-2002 |
| | | | AU | 764297 B2 | 14-08-2003 |
| | | | AU | 5517500 A | 31-01-2001 |
| | | | CA | 2377556 A1 | 04-01-2001 |
| | | | EP | 1194968 A1 | 10-04-2002 |
| | | | US | 6329089 B1 | 11-12-2001 |
| | | | US | 2001028967 A1 | 11-10-2001 |
| JP 1114268 | A | 02-05-1989 | JP | 2681181 B2 | 26-11-1997 |

EPO FORM P0459

For more details about this annex : see Official Journal of the European Patent Office, No. 12/82